# EUROPEAN PATENT APPLICATION

(11) **EP 3 079 248 A1**
(43) Date of publication of application: **12.10.2016**
(21) Application number: 14879835.8
(22) Date of filing: 24.09.2014
(51) Int. Cl.: H02M 1/42

(54) **POWER SUPPLY CONVERTER**

(30) Priority: 21.01.2014 CN 201410027491
(71) Applicant: Huawei Technologies Co., Ltd., Longgang District Shenzhen, Guangdong 518129 (CN)
(72) Inventor: LIU, Xujun, Shenzhen Guangdong 518129 (CN); YE, Liming, Shenzhen Guangdong 518129 (CN)
(74) Representative: Epping - Hermann - Fischer
(86) International application number: PCT/CN2014/087249
(87) International publication number: WO 2015/109862

(57) **Abstract**

A power supply converter includes: a power input circuit, which generates and outputs a first alternating current voltage; a transformer, which converts the first alternating current voltage into a second alternating current voltage; a power output circuit, which converts the second alternating current voltage into an output voltage, and outputs the output voltage; a resonant circuit, which resonates when a frequency of the first alternating current voltage is equal to a resonance frequency of the resonant circuit, to implement a zero current switch for the power input circuit or a zero voltage switch for the transformer; and a correction circuit, which senses the first alternating current voltage to obtain a detection signal, and detects a value of a ringing signal in the detection signal, and sends a control signal to the power input circuit according to the value of the ringing signal, to adjust the frequency of the first alternating current voltage to be equal to the resonance frequency of the resonant circuit or be around the resonance frequency, so as to adjust the value of the ringing signal to reach a minimum value. The power supply converter can improve conversion efficiency of the power supply converter.

## Description

### TECHNICAL FIELD

The present invention relates to the field of power supplies, and in particular, to a power supply converter.

### BACKGROUND

In a power supply conversion technology, a power supply converter is an essential component. Because a power conversion frequency of a power supply converter is increasingly higher, a requirement for conversion efficiency is also increasingly higher. In a normal case, a power supply converter includes various resonant topology structures, to decrease a loss during power conversion of the power supply converter. An LLC topology is a common resonant topology structure. The LLC topology resonates by using a resonant inductor and a resonant capacitor, to implement a zero current switch (Zero Current Switch, ZCS) and a zero voltage switch (Zero Current Switch, ZVS), so as to greatly improve conversion efficiency of the power supply converter. However, there is always an error during manufacturing of various components in the power supply converter, and especially, an error is relatively large for the resonant inductor. If errors of the various components are added up, the resonant inductor and the resonant capacitor cannot be maintained in a resonant state all the time, leading to relatively low conversion efficiency of the power supply converter.

### SUMMARY

A power supply converter is provided, which has relatively high conversion efficiency.

According to an aspect, a power supply converter is provided, where the power supply converter includes:
a power input circuit, configured to generate a first alternating current voltage, and output the first alternating current voltage;
a transformer, configured to convert the first alternating current voltage into a second alternating current voltage, where a voltage value of the second alternating current voltage is not equal to a voltage value of the first alternating current voltage;
a power output circuit, configured to convert the second alternating current voltage into an output voltage, and output the output voltage, where the output voltage is an alternating current voltage that is not equal to the second alternating current voltage, or the output voltage is a direct current voltage;
a resonant circuit, where the resonant circuit is configured to resonate when a frequency of the first alternating current voltage output by the power input circuit is equal to a resonance frequency of the resonant circuit, to implement a zero current switch for the power input circuit or a zero voltage switch for the transformer; and
a correction circuit, configured to sense the first alternating current voltage to obtain a detection signal, detect a value of a ringing signal in the detection signal, and send a control signal to the power input circuit according to the value of the ringing signal, to adjust the frequency of the first alternating current voltage output by the power input circuit to be equal to the resonance frequency of the resonant circuit or enable an offset between the frequency of the first alternating current voltage output by the power input circuit and the resonance frequency of the resonant circuit to fall within a range of plus or minus ten percent, so as to adjust the value of the ringing signal to reach a minimum value.

In a first possible implementation manner, the resonant circuit includes a resonant inductor, and the correction circuit includes:
a signal detection circuit, configured to sense a voltage signal between two ends of the resonant inductor to obtain the detection signal, where the detection signal includes a sine wave signal and the ringing signal;
a high-pass filter circuit, configured to filter out the sine wave signal in the detection signal, and enable the ringing signal to pass through;
a rectifier circuit, configured to rectify, into a direct current pulse signal, the ringing signal that passes through the high-pass filter circuit;
a low-pass filter circuit, configured to convert the direct current pulse signal into a direct current signal; and
a control circuit, configured to send a control signal to the power input circuit according to a value of the direct current signal, to adjust the frequency of the first alternating current voltage output by the power input circuit, so as to enable the frequency of the first alternating current voltage output by the input circuit to be equal to the resonance frequency of the resonant circuit or enable an offset between a working frequency of the power input circuit and the resonance frequency of the resonant circuit to fall within a range of plus or minus ten percent.

With reference to the first possible implementation manner, in a second possible implementation manner, the signal detection circuit and the resonant inductor form a sensing transformer, the resonant inductor is a primary coil of the sensing transformer, and the signal detection circuit is a secondary coil of the sensing transformer.

With reference to the second possible implementation manner, in a third possible implementation manner, the high-pass filter circuit includes a first capacitor and a first resistor; and one end of the secondary coil of the sensing transformer connects the first capacitor and the first resistor to the other end of the secondary coil of the sensing transformer.

With reference to the third possible implementation manner, in a fourth possible implementation manner, the rectifier circuit includes a second capacitor, a third capacitor, a first diode, and a second diode; one end of the second capacitor is connected to a node between the secondary coil of the sensing transformer and the first resistor, and the other end is connected to a cathode of the first diode; one end of the third capacitor is connected to a node between the secondary coil of the sensing transformer and the first resistor, and the other end is grounded; and an anode of the first diode is connected to a node between the first resistor and the first capacitor; and a cathode of the second diode is connected to the node between the first resistor and the first capacitor, and an anode of the second diode is grounded.

With reference to the fourth possible implementation manner, in a fifth possible implementation manner, the low-pass filter circuit includes a second resistor and a fourth capacitor; and one end of the second resistor is connected to the cathode of the first diode, and the other end of the second resistor connects the fourth capacitor to the ground.

With reference to the fifth possible implementation manner, in a sixth possible implementation manner, the power supply converter further includes a third resistor; and one end of the third resistor is grounded, and the other end is connected to a node between the second resistor and the fourth capacitor.

With reference to the first possible implementation manner, in a seventh possible implementation manner, the power input circuit includes multiple switch units; the multiple switch units separately receive a switch signal, and convert an original direct current voltage into the first alternating current voltage under control of the switch signal; and the control circuit adjusts a duty cycle or a frequency of the switch signal by using the control signal, to adjust the working frequency of the power input circuit, so as to adjust the frequency of the first alternating current voltage.

With reference to the first possible implementation manner, in an eighth possible implementation manner, an adjustment method for adjusting, by the control circuit, the frequency of the first alternating current voltage output by the power input circuit, to enable the frequency of the first alternating current voltage output by the input circuit to be equal to the resonance frequency of the resonant circuit or enable the offset between the frequency of the first alternating current voltage output by the power input circuit and the resonance frequency of the resonant circuit to fall within a range of plus or minus ten percent is:
increasing an initial frequency of the first alternating current voltage by a first preset frequency increment;
detecting the value of the direct current signal;
comparing a difference between a direct current signal obtained when the initial frequency is increased by the first preset frequency increment and a direct current signal obtained at the initial frequency;
if the difference between the direct current signal obtained when the frequency is increased by the first preset frequency increment and the direct current signal obtained at the initial frequency is greater than zero, decreasing the initial frequency by a second preset frequency increment;
detecting the value of the direct current signal;
comparing a difference between a direct current signal obtained when the frequency is decreased by the second preset frequency increment and the direct current signal obtained at the initial frequency; and
if the difference between the direct current signal obtained when the frequency is decreased by the second preset frequency increment and the direct current signal obtained at the initial frequency is greater than zero, determining that the initial frequency is equal to the resonance frequency.

With reference to the eighth possible implementation manner, in a ninth possible implementation manner, if the difference between the direct current signal obtained when the frequency is increased by the first preset frequency increment and the direct current signal obtained at the initial frequency is less than zero, go back to continue to increase a current frequency by a first preset frequency increment, and a process of increasing the current frequency by the first preset frequency increment is repeated until the ringing signal is increased, so that a frequency before the ringing signal is increased is the resonance frequency.

With reference to the ninth possible implementation manner, in a tenth possible implementation manner, if the difference between the direct current signal obtained when the frequency is decreased by the second preset frequency increment and the direct current signal obtained at the initial frequency is less than zero, go back to decrease a current frequency by a second preset frequency increment, and a process of decreasing the current frequency by the second preset frequency increment is repeated until the ringing signal is increased, so that a frequency before the ringing signal is increased is the resonance frequency.

According to the power supply converter provided by the implementation manners, a correction circuit is disposed in the power supply converter; and the correction circuit senses a value, in the power supply converter, of a ringing signal in a first alternating current voltage that flows through the resonant circuit, and adjusts a frequency of the first alternating current voltage according to the value of the ringing signal, to enable the frequency of the first alternating current voltage to be equal to a resonance frequency of the resonant circuit or enable a difference between the frequency of the first alternating current voltage and the resonance frequency of the resonant circuit to fall within a range. That is, the resonant circuit is maintained in a resonant state; in this case, the value of the ringing signal reaches a minimum value, and because the resonant circuit is maintained in the resonant state, a zero voltage switch for a power input circuit and a zero current switch for a transformer are implemented, and therefore, conversion efficiency of the power supply converter is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a circuit structure of a power supply converter according to an exemplary implementation manner of the present invention;
FIG. 2 is a circuit diagram of an exemplary implementation manner of a power input circuit shown in FIG. 1;
FIG. 3 is a diagram of a waveform of a voltage signal including a ringing signal according to the present invention;
FIG. 4 is a schematic diagram of a control method for controlling, by a control circuit, a power input circuit according to the present invention; and
FIG. 5 is a schematic diagram of a waveform of a value of a ringing signal and a period of a first alternating current voltage output by a power input circuit and a schematic diagram of a waveform of conversion efficiency of the power supply converter and a period of the first alternating current voltage output by the power input circuit according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

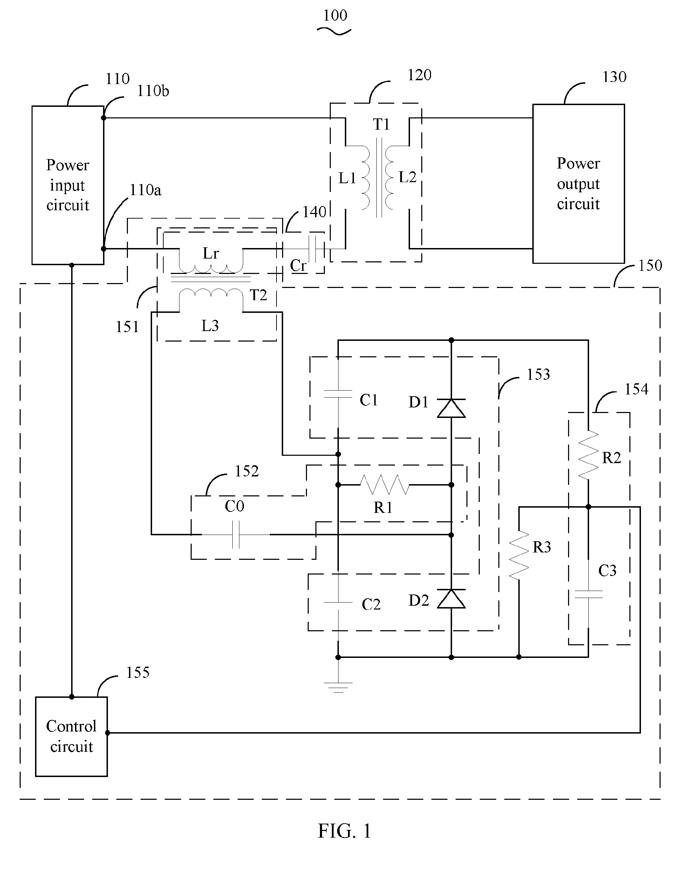

Refer to FIG. 1, which is a schematic diagram of a circuit structure of a power supply converter according to an exemplary implementation manner of the present invention. The power supply converter 100 includes a power input circuit 110, a transformer 120, a power output circuit 130, a resonant circuit 140, and a correction circuit 150.

The power input circuit 110 is configured to generate a first alternating current voltage, and output the first alternating current voltage. The transformer 120 is configured to convert the first alternating current voltage into a second alternating current voltage. The power output circuit 130 is configured to convert the second alternating current voltage into an output voltage, and output the output voltage. The output voltage may be a direct current voltage or may be an alternating current voltage whose voltage value is not equal to a voltage value of the second alternating current voltage. The resonant circuit 140 includes a resonant capacitor Cr and a resonant inductor Lr. The resonant inductor Lr is connected in series to the resonant capacitor Cr, and the resonant circuit 140 resonates when a frequency of the first alternating current voltage output by the power input circuit 110 is equal to a resonance frequency of the resonant circuit 140, to implement a zero current switch for the power input circuit 110 or a zero voltage switch for the transformer 120. The correction circuit 150 is configured to sense the first alternating current voltage to obtain a detection signal, detect a value of a ringing signal in the detection signal, and send a control signal to the power input circuit 110 according to the value of the ringing signal, to adjust the frequency of the first alternating current voltage output by the power input circuit 110 to be equal to the resonance frequency of the resonant circuit 140 or enable the frequency of the first alternating current voltage output by the power input circuit 110 to be around the resonance frequency of the resonant circuit 140, so as to adjust the value of the ringing signal to reach a minimum value. For example, an offset between the frequency of the first alternating current voltage output by the power input circuit 110 and the resonance frequency of the resonant circuit 140 may be enabled to fall within a range of plus or minus ten percent. An example in which the frequency of the first alternating current voltage output by the power input circuit 110 is adjusted to be equal to the resonance frequency of the resonant circuit 140 is used for description below.

The detection signal may be a current signal or may be a voltage signal. In this implementation manner, the detection circuit 150 is configured to sense a voltage signal between two ends of the resonant inductor Lr, where the voltage signal between the two ends of the resonant inductor Lr is the detection signal.

The power input circuit 110 includes a first output end 110a and a second output end 110b, and outputs the first alternating current voltage from the first output end 110a and the second output end 110b.

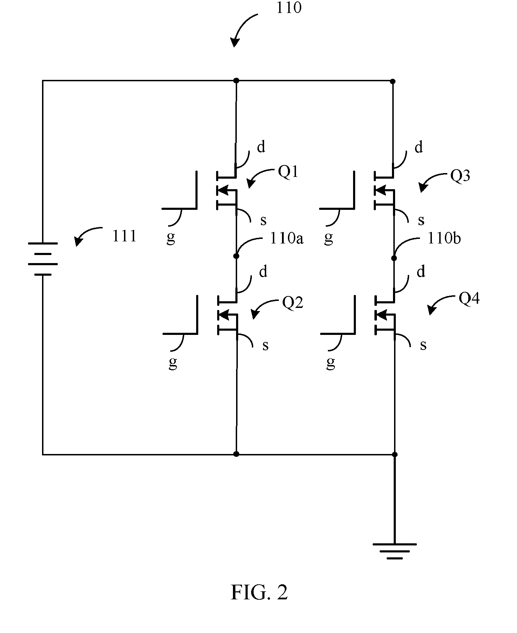

Also refer to FIG. 2, which is a circuit diagram of an exemplary implementation manner of the power input circuit shown in FIG. 1. The power input circuit 110 includes a direct current source 111 and multiple switch units. The direct current source 111 includes an anode and a cathode, and is configured to generate an original direct current voltage, where the cathode of the direct current source 111 is grounded. The multiple switch units separately receive a switch signal, and convert the original direct current voltage into the first alternating current voltage under control of the switch signal. The power input circuit 110 may be a power supply converter circuit or a high frequency switch mode power supply conversion circuit. In this implementation manner, the power input circuit 110 is a high frequency switch mode power supply conversion circuit, and includes four N-channel metal oxide semiconductor field effect transistors (n-channel metal oxide semiconductor field effect transistor, NMOSFET) as switch units. For ease of description, the four NMOSFETs are separately named as a first switch unit Q1, a second switch unit Q2, a third switch unit Q3, and a fourth switch unit Q4. The first switch unit Q1, the second switch unit Q2, the third switch unit Q3, and the fourth switch unit Q4 each include a gate g, a source s, and a drain d. The gate g of each of the first switch unit Q1, the second switch unit Q2, the third switch unit Q3, and the fourth switch unit Q4 is configured to receive a switch signal, and control, under control of the switch signal, turn-on or turn-off of a switch tube between the source s and the drain d of each switch unit. When the switch tube between the source s and the drain d is turned on, the switch unit is cut off; and when the switch tube between the source s and the drain d is turned off, the switch unit is conducted.

The drain d of the first switch unit Q1 is connected to the anode of the direct current source 111, and the source s of the first switch unit Q1 is connected to the first output end 110a. The drain d of the second switch unit Q2 is connected to the first output end 110a, and the source s of the second switch unit Q2 is grounded. The drain d of the third switch unit Q3 is connected to the anode of the direct current source 111, and the source s of the third switch unit Q3 is connected to the second output end 110b. The drain d of the fourth switch unit Q4 is connected to the second output end 110b, and the source s of the fourth switch unit Q4 is grounded. The first switch unit Q1, the second switch unit Q2, the third switch unit Q3, and the fourth switch unit Q4 are periodically conducted and cut off, and the first output end 110a and the second output end 110b are periodically connected to the anode of the direct current source 111 and the ground in turn; therefore, a high-frequency alternating current voltage is formed between the first output end 110a and the second output end 110b, and the high-frequency alternating current voltage is the first alternating current voltage.

Referring to FIG. 1 again, the transformer 120 includes a primary coil L1 and a secondary coil L2. One end of the primary coil L1 connects the resonant circuit 140 to the first output end 110a, and the other end of the primary coil L1 is connected to the second output end 110b. The primary coil L1 is configured to receive the first alternating current voltage, the transformer 120 is configured to convert the first alternating current voltage into the second alternating current voltage, and the secondary coil L2 is configured to output the second alternating current voltage. It may be understood that, a relationship between a value of the second alternating current voltage and a value of the first alternating current voltage is in direct proportion to a proportion of a quantity of coils of the secondary coil L2 to a quantity of coils of the primary coil L1. When the proportion of the quantity of coils of the secondary coil L2 to the quantity of coils of the primary coil L1 is greater than one, the value of the second alternating current voltage is greater than the value of the first alternating current voltage, that is, the transformer 120 is a step-up transformer; and when the proportion of the quantity of coils of the secondary coil L2 to the quantity of coils of the primary coil L1 is less than one, the value of the second alternating current voltage is less than the value of the first alternating current voltage, that is, the transformer 120 is a step-down transformer.

The power output circuit 130 is connected to the secondary coil L2 of the transformer 120, and is configured to output an output voltage according to the second alternating current voltage. Specifically, the power output circuit 130 receives the second alternating current voltage, converts the second alternating current voltage into a first voltage, and outputs the first voltage. It may be understood that, the output first voltage may be an alternating current voltage or may be a direct current voltage.

The resonant circuit 140 includes the resonant capacitor Cr and the resonant inductor Lr. One end of the resonant inductor Lr is connected to the first output end 110a, and the other end of the resonant inductor Lr connects the resonant capacitor Cr to one end of the primary coil L1 of the transformer 120. The resonant circuit 140 resonates when the resonance frequency of the resonant circuit 140 is equal to a working frequency of the power input circuit 110. When the resonant circuit 140 resonates, a current in the switch unit changes according to a standard sine rule, that is, a current in the switch unit is a standard sine wave. When a current whose waveform is a sine wave resonates to zero, the switch unit is disconnected, so as to implement the zero current switch (Zero Current Switch, ZCS). In addition, when the resonant circuit 140 resonates, a voltage of the primary coil L1 of the transformer 120 changes according to a standard sine rule, that is, the voltage of the primary coil L1 is a standard sine wave. When a voltage whose waveform is a sine wave resonates to zero, the transformer 120 is disconnected, so as to implement the zero voltage switch (Zero Voltage Switch, ZVS).

The correction circuit 150 includes a signal detection circuit 151, a high-pass filter circuit 152, a rectifier circuit 153, a low-pass filter circuit 154, and a control circuit 155.

The signal detection circuit 151 is configured to sense the voltage signal between the two ends of the resonant inductor Lr, to obtain the detection signal.

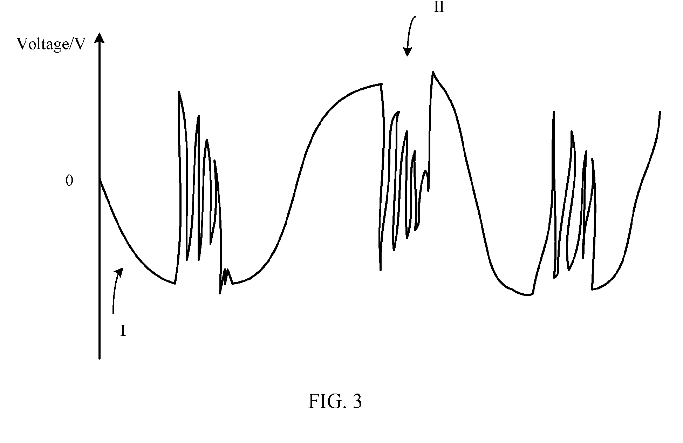

Specifically, in this implementation manner, the signal detection circuit 151 and the resonant inductor Lr form a sensing transformer. Herein, the sensing transformer is represented by T2, the resonant inductor Lr is a primary coil of the sensing transformer T2, and the signal detection circuit 151 is a secondary coil L3 of the sensing transformer T2. Because the resonant inductor Lr and the signal detection circuit 151 form the sensing transformer T2, the voltage signal between the two ends of the resonant inductor Lr may be coupled into the signal detection circuit 151 from the two ends of the resonant inductor Lr because of coupling of the sensing transformer T2. Refer to FIG. 3, which is a diagram of a waveform of a voltage signal including a ringing signal II according to the present invention. As can be seen from FIG. 3, the voltage signal includes a sine wave signal I and the ringing signal II. The ringing signal II is generated because of resonance of the resonant inductor Lr and a junction capacitor in the switch unit in the power input circuit 110. The resonant circuit 140 resonates when the resonance frequency of the resonant circuit 140 is equal to the working frequency of the power input circuit 110. In this case, an amplitude of the ringing signal II is the minimum, and conversion efficiency of the power supply converter 110 is the maximum. Therefore, it can be known, by detecting the amplitude of the ringing signal II, whether the power supply converter 100 works in an optimal working state.

Referring to FIG. 1 again, the high-pass filter circuit 152 is configured to filter out the sine wave signal I in the voltage signal, and enable the ringing signal II to pass through. The high-pass filter circuit 152 includes a first capacitor C0 and a first resistor R1. After the first capacitor C0 and the first capacitor R1 are connected in series, the first capacitor C0 and the first capacitor R1 are connected at two ends of the secondary coil L3 of the sensing transformer T2. In other words, one end of the secondary coil L3 of the sensing transformer T2 connects the first capacitor C0 and the first resistor R1 to the other end of the secondary coil L3 of the sensing transformer T2.

The rectifier circuit 153 is configured to rectify, into a direct current pulse signal, the ringing signal II that passes through the high-pass filter circuit 152. Specifically, the rectifier circuit 153 includes a second capacitor C1, a third capacitor C2, a first diode D1, and a second diode D2. One end of the second capacitor C1 is connected to a node between the secondary coil L3 of the sensing transformer T2 and the first resistor R1, and the other end of the second capacitor C1 is connected to a cathode of the first diode D1. One end of the third capacitor C2 is connected to a node between the secondary coil L3 of the sensing transformer T2 and the first resistor R1, and the other end of the third capacitor C2 is grounded. An anode of the first diode D1 is connected to a node between the first resistor R1 and the first capacitor C0. A cathode of the second diode D2 is connected to the node between the first resistor R1 and the first capacitor C0, and an anode of the second diode D2 is grounded. The first diode D1 and the second diode D2 are both unidirectionally conducted. When a voltage of the anode of the first diode D1 is greater than a voltage of the cathode of the first diode D1, the first diode D1 is conducted; and when the voltage of the anode of the first diode D1 is less than the voltage of the cathode of the first diode D1, the first diode D1 is cut off. When a voltage of the anode of the second diode D2 is greater than a voltage of the cathode of the second diode D2, the second diode D2 is conducted; and when the voltage of the anode of the second diode D2 is less than the voltage of the cathode of the second diode D2, the second diode D2 is cut off.

The low-pass filter circuit 154 is configured to convert the direct current pulse signal into a direct current signal. After the direct current pulse signal passes through the low-pass filter circuit 154, a waveform of the direct current pulse signal becomes smoother. Specifically, the low-pass filter circuit 154 includes a second resistor R2 and a fourth capacitor C3. One end of the second resistor R2 is connected to the cathode of the first diode D1, and the other end of the second resistor R2 connects the fourth capacitor C3 to the ground.

The control circuit 155 is configured to send a control signal to the power input circuit 110 according to a value of the direct current signal, to adjust the frequency of the first alternating current voltage output by the power input circuit 110. Specifically, the value of the direct current signal represents a value of the amplitude of the ringing signal II, when the direct current signal is relatively large, it indicates that the amplitude of the ringing signal II included in the voltage signal is relatively large; and when the direct current signal is relatively small, it indicates that the amplitude of the ringing signal II included in the voltage signal is relatively small. Therefore, the value of the direct current signal may be used as a basis for the control circuit 155 to adjust the frequency of the first alternating current voltage output by the input circuit 110.

The control circuit 155 may adjust a duty cycle or a frequency of the switch signal by controlling the control signal, to adjust the frequency of the first alternating current voltage output by the power input circuit 110, so as to enable the frequency of the first alternating current voltage output by the power input circuit 110 to be equal to the resonance frequency of the resonant circuit 140, so that the resonant circuit 140 resonates.

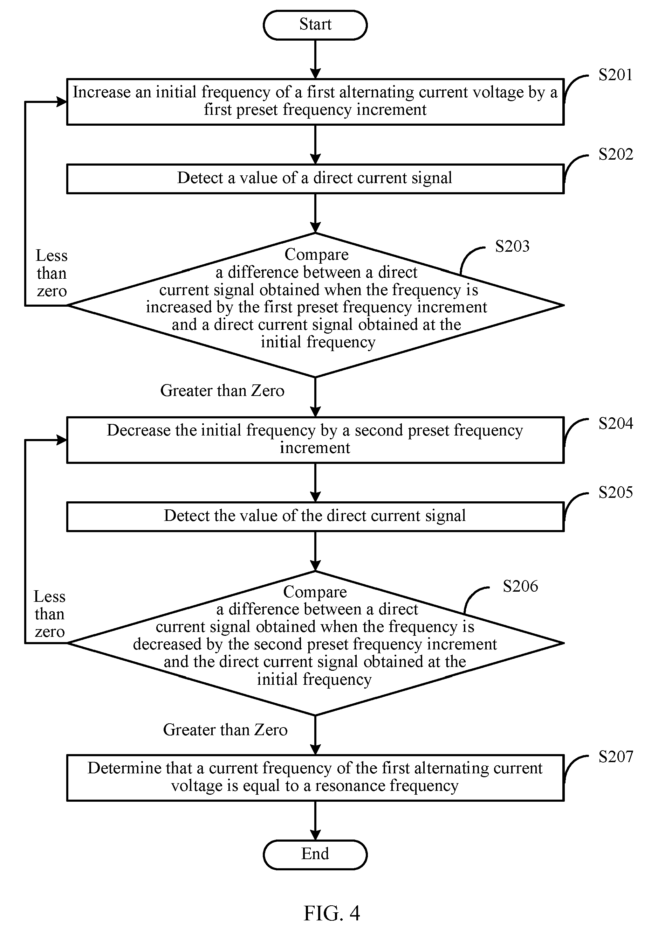

In an exemplary implementation manner, a process in which the control circuit 155 sends the control signal to adjust the frequency of the first alternating current voltage output by the power input circuit 110 is specifically described as follows. Refer to FIG. 4, which is a schematic diagram of a control method for controlling, by the control circuit, the power input circuit according to the present invention.
S201: Increase an initial frequency of the first alternating current voltage by a first preset frequency increment. It may be understood that, a value of the first preset frequency increment may be selected as required, to meet that the frequency of the first alternating current voltage can be adjusted to be equal to the resonance frequency as soon as possible.
S202: Detect the value of the direct current signal.
S203: Compare a difference between a direct current signal obtained when the frequency is increased by the first preset frequency increment and a direct current signal obtained at the initial frequency.
   If the difference between the direct current signal obtained when the frequency of the first alternating current voltage is increased by the first preset frequency increment and the direct current signal obtained when the frequency of the first alternating current voltage is the initial frequency is less than zero, go back to step S201, and step S201 is repeatedly performed until the ringing signal is increased, so that the frequency of the first alternating current voltage before the ringing signal is increased is equal to the resonance frequency. If a difference between the direct current signal obtained when the frequency of the first alternating current voltage is increased by the first preset frequency increment and a direct current signal obtained when the frequency of the first alternating current voltage is not increased by the first preset frequency increment is greater than zero, step S204 is performed.
   Specifically, if the difference between the direct current signal obtained when the frequency of the first alternating current voltage is increased by the first preset frequency increment and the direct current signal obtained when the first alternating current voltage is the initial frequency is less than zero, it indicates that a value of the direct current signal obtained when the frequency of the first alternating current voltage is increased by the first preset frequency increment is less than a value of the direct current signal obtained when the frequency of the first alternating current voltage is the initial frequency. That is, an amplitude of a ringing signal obtained when the frequency of the first alternating current voltage is increased by the first preset frequency increment is less than an amplitude of a ringing signal obtained when the frequency of the first alternating current voltage is the initial frequency. Therefore, it indicates that increasing the frequency of the first alternating current voltage as the initial frequency in this case can decrease the amplitude of the ringing signal. If the difference between the direct current signal obtained when the frequency of the first alternating current voltage is increased by the first preset frequency increment and the direct current signal obtained when the frequency of the first alternating current voltage is the initial frequency is greater than zero, it indicates that the value of the direct current signal obtained when the frequency of the first alternating current voltage is increased by the first preset frequency increment is greater than the value of the direct current signal obtained when the frequency of the first alternating current voltage is the initial frequency. That is, the amplitude of the ringing signal obtained when the frequency of the first alternating current voltage is increased by the first preset frequency increment is greater than the amplitude of the ringing signal obtained when the frequency of the first alternating current voltage is the initial frequency. Therefore, it indicates that increasing the initial frequency of the first alternating current voltage in this case cannot decrease the amplitude of the ringing signal, but instead, increases the amplitude of the ringing signal.
S204: Decrease the initial frequency of the first alternating current voltage by a second preset frequency increment. It may be understood that, a value of the second preset frequency increment may be selected as required, to meet that the frequency of the first alternating current voltage can be adjusted to be equal to the resonance frequency as soon as possible.
S205: Detect the value of the direct current signal.
S206: Compare a difference between a direct current signal obtained when the frequency of the first alternating current voltage is decreased by the second preset frequency increment and the direct current signal obtained when the frequency of the first alternating current voltage is the initial frequency.

If the difference between the direct current signal obtained when the frequency of the first alternating current voltage is decreased by the second preset frequency increment and the direct current signal obtained when the frequency of the first alternating current voltage is the initial frequency is less than zero, go back to step S204, and step S204 is repeatedly performed until the ringing signal is increased, so that the frequency of the first alternating current voltage before the ringing signal is increased is equal to the resonance frequency. If the difference between the direct current signal obtained when the frequency of the first alternating current voltage is decreased by the second preset frequency increment and the direct current signal obtained when the frequency of the first alternating current voltage is the initial frequency is greater than zero, step S207 is performed.

Specifically, if the difference between the direct current signal obtained when the frequency of the first alternating current voltage is decreased by the second preset frequency increment and the direct current signal obtained when the frequency of the first alternating current voltage is the initial frequency is less than zero, it indicates that a value of the direct current signal obtained when the frequency of the first alternating current voltage is decreased by the second preset frequency increment is less than a value of the direct current signal obtained when the frequency of the first alternating current voltage is the initial frequency. That is, an amplitude of a ringing signal obtained when the frequency of the first alternating current voltage is decreased by the second preset frequency increment is less than an amplitude of a ringing signal obtained when the frequency of the first alternating current voltage is an initial working frequency. Therefore, it indicates that decreasing the initial frequency of the first alternating current voltage in this case can decrease the amplitude of the ringing signal. If the difference between the direct current signal obtained when the frequency of the first alternating current voltage is decreased by the second preset frequency increment and the direct current signal obtained when the frequency of the first alternating current voltage is the initial frequency is greater than zero, it indicates that the value of the direct current signal obtained when the frequency of the first alternating current voltage is decreased by the second preset frequency increment is greater than the value of the direct current signal obtained when the frequency of the first alternating current voltage is the initial frequency. That is, the amplitude of the ringing signal obtained when the frequency of the first alternating current voltage is increased by the second preset frequency increment is greater than the amplitude of the ringing signal obtained when the frequency of the first alternating current voltage is the initial frequency. Therefore, it indicates that decreasing the initial frequency of the first alternating current voltage in this case cannot decrease the amplitude of the ringing signal, but instead, increases the amplitude of the ringing signal. It may be understood that, the second preset frequency increment may be equal to the first preset frequency increment or may be not equal to the first preset frequency increment. A relationship between the values of the first preset frequency increment and the second preset frequency increment may be set as required, to meet that the frequency of the first alternating current voltage can be adjusted to be equal to the resonance frequency as soon as possible.

S207: Determine that a current frequency of the first alternating current voltage is equal to the resonance frequency.

Specifically, with reference to the foregoing steps, it is seen that, the initial frequency of the first alternating current voltage is increased by the first preset frequency increment; if the difference between the direct current signal obtained when the frequency of the first alternating current voltage is increased by the first preset frequency increment and the direct current signal obtained when the frequency of the first alternating current voltage is the initial frequency is greater than zero, the initial frequency of the first alternating current voltage is decreased by the second preset frequency increment; and if the difference between the direct current signal obtained when the frequency of the first alternating current voltage is decreased by the second preset frequency increment and the direct current signal obtained when the frequency of the first alternating current voltage is the initial frequency is greater than zero, it indicates that an amplitude of an obtained ringing signal becomes larger no matter whether the current frequency of the first alternating current voltage is increased by the first preset frequency increment or is decreased by the second preset frequency increment, and it may be considered that the current frequency of the first alternating current voltage is equal to the resonance frequency because the amplitude of the ringing signal is the minimum when the current frequency of the first alternating current voltage is equal to the resonance frequency.

Referring to FIG. 1 again, the power supply converter 100 further includes a third resistor R3; and one end of the third resistor R3 is grounded, and the other end is connected to a node between the second resistor R2 and the fourth capacitor C3.

Although the present invention is described by using an example in which the correction circuit 150 detects the voltage signal between the two ends of the resonant inductor Lr, the present invention is not limited to detecting the voltage signal between the two ends of the resonant inductor Lr. In another implementation manner, the correction circuit 150 may also sense a voltage signal or a current signal of the first alternating current voltage. For ease of description, the voltage signal or the current signal of the first alternating current voltage is referred to as a detection signal. That is, the correction circuit 150 senses the voltage signal or the current signal of the first alternating current voltage, to obtain a detection signal. The correction circuit 150 detects a value of a ringing signal in the detection signal, and sends a control signal to the power input circuit 110 according to the value of the ringing signal in the detection signal, to adjust the frequency of the first alternating current voltage output by the power input circuit 110 to be equal to the resonance frequency of the resonant circuit 140.

It may be understood that, when the correction circuit 150 adjusts the frequency of the first alternating current voltage output by the power input circuit 110 to be equal to the resonance frequency of the resonant circuit 140, the correction circuit 150 may adjust the frequency of the first alternating current voltage output by the power input circuit 110 to be equal to the resonance frequency of the resonant circuit 140. Due to causes such as an error during manufacturing of an actual electronic component, when it is not easy to adjust the frequency of the first alternating current voltage output by the power input circuit 110 to be equal to the resonance frequency of the resonant circuit 140, the frequency of the first alternating current voltage output by the power input circuit 110 may also be adjusted to be roughly equal to the resonance frequency of the resonant circuit 140. In other words, the frequency of the first alternating current voltage output by the power input circuit 110 may be adjusted to be around the resonance frequency of the resonant circuit 140. When an absolute value of the difference between the frequency of the first alternating current voltage output by the power input circuit 110 and the resonance frequency of the resonant circuit 140 is less than or equal to a preset value, it may be considered that the frequency of the first alternating current voltage output by the power input circuit 110 is roughly equal to the resonance frequency of the resonant circuit 140. In this case, the conversion efficiency of the power supply converter 10 is relatively high.

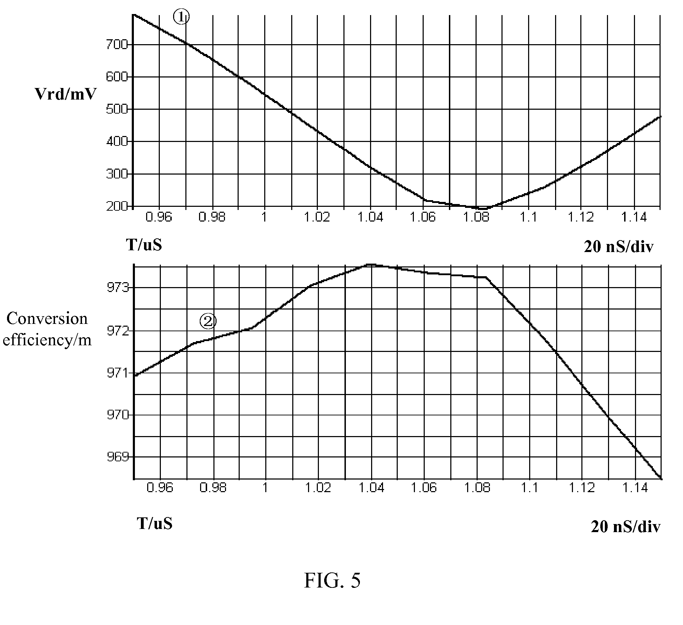

Referring to FIG. 5, which is a schematic diagram of a waveform of the value of the ringing signal and a working period of the first alternating current voltage output by the power input circuit, and a schematic diagram of a waveform of the conversion efficiency of the power supply converter and the working period of the first alternating current voltage output by the power input circuit according to the present invention. A waveform ① in FIG. 5 is a waveform curve of the value of the ringing signal and the working period of the first alternating current voltage output by the power input circuit. A waveform ② in FIG. 5 is a waveform curve of the conversion efficiency of the power supply converter 10 and the working period of the first alternating current voltage output by the power input circuit. Herein, the working period of the first alternating current voltage is a reciprocal of the frequency of the first alternating current voltage. In FIG. 5, as can be seen from the waveform ①, when the value of the ringing signal is around a minimum value, the conversion efficiency of the power supply converter 10 that is shown by the waveform ② is around a maximum value, that is, the conversion efficiency of the power supply converter 10 in this case is the maximum.

According to the power supply converter provided by the present invention, a correction circuit 150 is disposed in the power supply converter 100, and the correction circuit 150 senses a first alternating current voltage of a resonant circuit 140 in the power supply converter, to obtain a detection signal, detects a value of a ringing signal in the detection signal, and adjusts a frequency of the first alternating current voltage according to the value of the ringing signal, to enable the frequency of the first alternating current voltage output by the power input circuit 110 to be equal to a resonance frequency of the resonant circuit 140, or enable a difference between the frequency of the first alternating current voltage output by the power input circuit 110 and the resonance frequency of the resonant circuit 140 to fall within a range. Therefore, the resonant circuit 140 is maintained in a resonant state; in this case, the value of the ringing signal reaches a minimum value, so as to implement a zero voltage switch for the power input circuit 110 and a zero current switch for a transformer 120, thereby achieving a technical effect of improving conversion efficiency of the power supply converter 100.

What is disclosed above is merely exemplary embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A power supply converter, wherein the power supply converter comprises:
a power input circuit, configured to generate a first alternating current voltage, and output the first alternating current voltage;
a transformer, configured to convert the first alternating current voltage into a second alternating current voltage, wherein a voltage value of the second alternating current voltage is not equal to a voltage value of the first alternating current voltage;
a power output circuit, configured to convert the second alternating current voltage into an output voltage, and output the output voltage, wherein the output voltage is an alternating current voltage whose voltage value is not equal to the voltage value of the second alternating current voltage, or the output voltage is a direct current voltage;
a resonant circuit, wherein the resonant circuit is configured to resonate when a frequency of the first alternating current voltage output by the power input circuit is equal to a resonance frequency of the resonant circuit, to implement a zero current switch for the power input circuit or a zero voltage switch for the transformer; and
a correction circuit, configured to sense the first alternating current voltage to obtain a detection signal, detect a value of a ringing signal in the detection signal, and send a control signal to the power input circuit according to the value of the ringing signal, to adjust the frequency of the first alternating current voltage output by the power input circuit to be equal to the resonance frequency of the resonant circuit or enable an offset between the frequency of the first alternating current voltage output by the power input circuit and the resonance frequency of the resonant circuit to fall within a range of plus or minus ten percent, so as to adjust the value of the ringing signal to reach a minimum value.

2. The power supply converter according to claim 1, wherein the resonant circuit comprises a resonant inductor, and the correction circuit comprises:
a signal detection circuit, configured to sense a voltage signal between two ends of the resonant inductor to obtain the detection signal, wherein the detection signal comprises a sine wave signal and the ringing signal;
a high-pass filter circuit, configured to filter out the sine wave signal in the detection signal, and enable the ringing signal to pass through;
a rectifier circuit, configured to rectify, into a direct current pulse signal, the ringing signal that passes through the high-pass filter circuit;
a low-pass filter circuit, configured to convert the direct current pulse signal into a direct current signal; and
a control circuit, configured to send a control signal to the power input circuit according to a value of the direct current signal, to adjust the frequency of the first alternating current voltage output by the power input circuit, so as to enable the frequency of the first alternating current voltage output by the input circuit to be equal to the resonance frequency of the resonant circuit or enable an offset between a working frequency of the power input circuit and the resonance frequency of the resonant circuit to fall within a range of plus or minus ten percent.

3. The power supply converter according to claim 2, wherein the signal detection circuit and the resonant inductor form a sensing transformer, the resonant inductor is a primary coil of the sensing transformer, and the signal detection circuit is a secondary coil of the sensing transformer.

4. The power supply converter according to claim 3, wherein the high-pass filter circuit comprises a first capacitor and a first resistor; and one end of the secondary coil of the sensing transformer connects the first capacitor and the first resistor to the other end of the secondary coil of the sensing transformer.

5. The power supply converter according to claim 4, wherein the rectifier circuit comprises a second capacitor, a third capacitor, a first diode, and a second diode; one end of the second capacitor is connected to a node between the secondary coil of the sensing transformer and the first resistor, and the other end is connected to a cathode of the first diode; one end of the third capacitor is connected to a node between the secondary coil of the sensing transformer and the first resistor, and the other end is grounded; and an anode of the first diode is connected to a node between the first resistor and the first capacitor; and a cathode of the second diode is connected to the node between the first resistor and the first capacitor, and an anode of the second diode is grounded.

6. The power supply converter according to claim 5, wherein the low-pass filter circuit comprises a second resistor and a fourth capacitor; and one end of the second resistor is connected to the cathode of the first diode, and the other end of the second resistor connects the fourth capacitor to the ground.

7. The power supply converter according to claim 6, wherein the power supply converter further comprises a third resistor; and one end of the third resistor is grounded, and the other end is connected to a node between the second resistor and the fourth capacitor.

8. The power supply converter according to claim 2, wherein the power input circuit comprises multiple switch units; the multiple switch units separately receive a switch signal, and convert an original direct current voltage into the first alternating current voltage under control of the switch signal; and the control circuit adjusts a duty cycle or a frequency of the switch signal by using the control signal, to adjust the working frequency of the power input circuit, so as to adjust the frequency of the first alternating current voltage.

9. The power supply converter according to claim 2, wherein an adjustment method for adjusting, by the control circuit, the frequency of the first alternating current voltage output by the power input circuit, to enable the frequency of the first alternating current voltage output by the input circuit to be equal to the resonance frequency of the resonant circuit or enable the frequency of the first alternating current voltage output by the power input circuit to fall within a range of plus or minus ten percent of the resonance frequency of the resonant circuit is:
increasing an initial frequency of the first alternating current voltage by a first preset frequency increment;
detecting the value of the direct current signal;
comparing a difference between a direct current signal obtained when the frequency is increased by the first preset frequency increment and a direct current signal obtained at the initial frequency;
if the difference between the direct current signal obtained when the frequency is increased by the first preset frequency increment and the direct current signal obtained at the initial frequency is greater than zero, decreasing the initial frequency by a second preset frequency increment;
detecting the value of the direct current signal;
comparing a difference between a direct current signal obtained when the frequency is decreased by the second preset frequency increment and the direct current signal obtained at the initial frequency; and
if the difference between the direct current signal obtained when the frequency is decreased by the second preset frequency increment and the direct current signal obtained at the initial frequency is greater than zero, determining that the initial frequency is equal to the resonance frequency.

10. The power supply converter according to claim 2, wherein if a difference between a direct current signal obtained when a frequency is increased by a first preset frequency increment and a direct current signal obtained at an initial frequency is less than zero, go back to continue to increase a current frequency by a first preset frequency increment, and a process of increasing the current frequency by the first preset frequency increment is repeated until the ringing signal is increased, so that a frequency before the ringing signal is increased is the resonance frequency.

11. The power supply converter according to claim 2, wherein if a difference between a direct current signal obtained when a frequency is decreased by a second preset frequency increment and a direct current signal obtained at an initial frequency is less than zero, go back to continue to decrease a current frequency by a second preset frequency increment, and a process of decreasing the current frequency by the second preset frequency increment is repeated until the ringing signal is increased, so that a frequency before the ringing signal is increased is the resonance frequency.
